# EUROPEAN PATENT APPLICATION

(11) **EP 4 835 717 A1**
(43) Date of publication of application: **04.11.2026**
(21) Application number: 26168116.7
(22) Date of filing: 26.03.2026
(51) Int. Cl.: G06F 21/75, G01R 31/317

(54) **VOLTAGE GLITCH DETECTOR AND METHOD FOR DETECTING A VOLTAGE TRANSIENT**

(30) Priority: 29.04.2025 CN 202510564561
(71) Applicant: NXP USA, Inc, Austin, TX 78735 (US)
(72) Inventor: Cheng, Yaping, 5656AG Eindhoven (NL); Zhang, Dongling, 5656AG Eindhoven (NL)
(74) Representative: Schwarzweller, Thomas

(57) **Abstract**

A voltage glitch detector and a method for detecting a voltage transient of an input voltage received at a first input terminal are presented. The voltage glitch detector comprises: a current generation circuit; a first current mirror circuit; a current regulation circuit; and an inverter circuit. The method comprises providing, by the current regulation circuit, a balancing current into a mirror branch of the first current mirror circuit; in response to the voltage transient of the input voltage at the first input terminal, generating, by the current generation circuit, a transient current; causing, by the current generation circuit, the generated transient current to flow into and/or out from the current generation circuit; and providing, by the inverter circuit, in response to an output of the mirror branch and at the first output terminal, an output signal in which a transition occurs indicative of the voltage transient detected.

## Description

### BACKGROUND

The present disclosure relates to a voltage glitch detector and a method for detecting a voltage transient.

Hackers inject power glitches to a chip system to interrupt its operation and implant malware to take over the control of the chip system. Conventional voltage glitch detectors (e.g., latch-type glitch detectors) work as comparators. A voltage glitch in an input voltage (e.g., a power supply voltage) of a chip system is detected by comparing the input voltage with a reference voltage by the comparator. Once the glitch causes the input voltage to rise (i.e., a positive glitch) or drop (i.e., a negative glitch) from the reference voltage by an amount which exceeds a threshold, the comparator generates a flip-over signal, thus providing a warning to the chip system indicating that a glitch in the input voltage is detected. The chip system may enable its defensive measures accordingly.

Voltage glitch detectors implemented as comparators are useful in low voltage applications like Low Voltage Detector (LVD) circuits, and are generally used for detecting slow glitches with long durations, while are challenging in detecting short and fast glitches.

### SUMMARY

This summary is provided to introduce a selection of concepts in a simplified form that are further described below in the Detailed Description. This summary is not intended to identify key or essential features of the claimed subject matter, nor is it intended to be used to limit the scope of the claimed subject matter.

A voltage glitch detector for detecting a voltage transient of an input voltage received at a first input terminal of the voltage glitch detector, comprising: a current generation circuit coupled with the first input terminal; a first current mirror circuit coupled with the current generation circuit; a current regulation circuit coupled with the first current mirror circuit; and an inverter circuit coupled with the first current mirror circuit, the current regulation circuit and a first output terminal of the voltage glitch detector, wherein the first current mirror circuit comprises a reference branch and a mirror branch; the current generation circuit is configured to generate a transient current and cause the generated transient current to flow into and/or out from the current generation circuit in response to the voltage transient of the input voltage at the first input terminal; the current regulation circuit is configured to provide a balancing current into the mirror branch; and the inverter circuit is configured to provide, in response to an output of the mirror branch and at the first output terminal, an output signal in which a transition occurs indicative of the voltage transient of the input voltage at the first input terminal detected.

A method for detecting a voltage transient of an input voltage received at a first input terminal by a voltage glitch detector, the voltage glitch detector comprising a current generation circuit coupled with the first input terminal, a first current mirror circuit coupled with the current generation circuit, a current regulation circuit coupled with the first current mirror circuit, and an inverter circuit coupled with the first current mirror circuit, the current regulation circuit and a first output terminal of the voltage glitch detector, wherein the method comprises: providing, by the current regulation circuit, a balancing current into a mirror branch of the first current mirror circuit; in response to the voltage transient of the input voltage at the first input terminal, generating, by the current generation circuit, a transient current; causing, by the current generation circuit, the generated transient current to flow into and/or out from the current generation circuit; and providing, by the inverter circuit and at the first output terminal, an output signal in which a transition occurs indicative of the voltage transient of the input voltage at the first input terminal detected.

In one or more embodiments, a reference branch (123) of the first current mirror circuit (102) comprises a first current source and a first transistor that are coupled in series between a power supply and a ground reference; and the mirror branch is coupled between the current regulation circuit and the ground reference, and further comprises a second transistor.

In one or more embodiments, a control terminal of the first transistor is coupled with a control terminal of the second transistor via a first resistor, the first resistor is coupled between the control terminal of the first transistor and a drain terminal of the first transistor which is further coupled with the first current source.

In one or more embodiments, the current regulation circuit comprises: a second current source coupled between the power supply and the second transistor; and a third transistor and a fourth transistor that are coupled in series between the power supply and the ground reference, wherein the third transistor is an N-MOSFET, and the fourth transistor is a P-MOSFET, and wherein a source terminal of the third transistor is coupled with a source terminal of the fourth transistor, a drain terminal of the second transistor and the second current source.

In one or more embodiments, the reference branch of the first current mirror circuit further comprises a seventh transistor, and the mirror branch of the first current mirror circuit further comprises an eighth transistor, wherein the seventh transistor is coupled between the first current source and the first transistor, and the eighth transistor is coupled between the second current source and the second transistor, and wherein a control terminal of the seventh transistor is coupled with a control terminal of the eighth transistor and a drain terminal of the seventh transistor.
In one or more embodiments, the inverter circuit comprises a fifth transistor and a sixth transistor that are coupled in series between the power supply and the ground reference, and wherein the fifth transistor is a P-MOSFET, and the sixth transistor is an N-MOSFET, and wherein a drain terminal of the second transistor is coupled with a gate terminal of the fifth transistor and a gate terminal of the sixth transistor.

### BRIEF DESCRIPTION OF THE DRAWINGS

So that the manner in which the above recited features of the present disclosure can be understood in detail, a more detailed description of the disclosure may be had by reference to embodiments, some of which are illustrated in the appended drawings. The appended drawings illustrate only typical embodiments of the disclosure and should not limit the scope of the disclosure, as the disclosure may have other equally effective embodiments. The drawings are for facilitating an understanding of the disclosure and thus are not necessarily drawn to scale. Advantages of the subject matter claimed will become apparent to those skilled in the art upon reading this description in conjunction with the accompanying drawings, in which like reference numerals have been used to designate like elements, and in which:
FIG. 1 is a block diagram depicting a voltage glitch detector for detecting a voltage transient in accordance with a first embodiment of the present disclosure;
FIG. 2 is a block diagram depicting the current mirror circuit of the voltage glitch detector in accordance with the first embodiment of the present disclosure;
FIG. 3 is a circuit diagram mapping the block diagram of FIG. 1 in accordance with the first embodiment of the present disclosure;
FIG. 4 is the circuit diagram of FIG. 3 depicting the voltage glitch detector in accordance with the first embodiment of the present disclosure;
FIG. 5 and FIG. 6 respectively shows a schematic diagram of voltage analysis for nodes of circuitry of the voltage glitch detector and a schematic diagram of current analysis for branches of circuitry of the voltage glitch detector in accordance with the first embodiment of the present disclosure;
FIG. 7 shows a circuit diagram of the programmable capacitor of the voltage glitch detector in accordance with the first embodiment of the present disclosure;
FIG. 8 is a circuit diagram of a voltage glitch detector in accordance with a second embodiment of the present disclosure;
FIG. 9 shows timing diagrams of input voltage and output voltage under different parameter conditions in accordance with the second embodiment of the present disclosure;
FIG. 10 is a circuit diagram of a voltage glitch detector in accordance with a third embodiment of the present disclosure.

### DETAILED DESCRIPTION

Capacitors do not have stable 'resistance' as conductors do. However, there is a definite mathematical relationship between voltage and current for a capacitor, as follows:
$i = C \frac{dv}{dt}$ (1)

Where, the lower-case letter 'i' symbolizes instantaneous current through the capacitor. This stands in contrast to constant current or average current (i.e., capital letter 'I') over an unspecified period of time. The upper-case letter 'C' is a capacitance, in the unit of Farads, of the capacitor. The expression 'dv/dt' is one borrowed from calculus, which stands for the instantaneous rate of voltage change over time, or the rate of change of voltage (i.e., volts per second increase or decrease) at a specific point in time, the same specific point in time that the instantaneous current is referenced at. Considering that both the instantaneous current through the capacitor and the expression 'dv/dt' possess directionality along with sign changes associated with the directionality, the calculation of the current magnitude in the context of the present disclosure only considers the influence of the absolute value of 'dv/dt'. The specific direction of the current provided by the capacitor when the capacitor is working in a charge state or a discharge state will be addressed in the explanations of subsequent specific implementation examples.

Obviously, a rapidly dropping/rising voltage transient will produce a significant 'dv/dt' value. Thus, the characteristic that the instantaneous current of a capacitor is proportional to the rate of change of voltage over time can be applied to short and fast voltage transient detection.

In general terms, embodiments of the present disclosure typically make use of a capacitor as a current generation circuit, which generates a current in response to a voltage glitch at an input terminal. The generated current creates an imbalance in a current mirror circuit, which imbalance is corrected by a balancing current from a current regulation circuit. The imbalance of the current mirror circuit shifts the voltage level at a voltage node thereof. This voltage shift is inverted by an inverter circuit, to provide an output signal indicative of the voltage glitch.

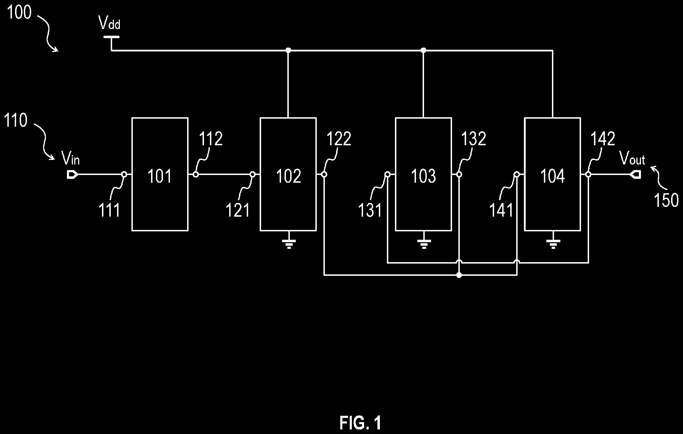

FIG. 1 is a block diagram depicting a voltage glitch detector for detecting a voltage transient in accordance with a first embodiment of the present disclosure. The voltage glitch detector 100 is provided for detecting a voltage transient of an input voltage received at an input terminal 110. The voltage glitch detector 100 includes a current generation circuit 101, a current mirror circuit 102, a current regulation circuit 103, and an inverter circuit 104. An input end 111 of the current generation circuit 101 is coupled with the input terminal 110. An input end 121 of the current mirror circuit 102 is coupled with an output end 112 of the current generation circuit 101. An input end 131 of the current regulation circuit 103 is coupled with an output end 142 of the inverter circuit 104. An output end 132 of the current regulation circuit 103 is coupled with an output end 122 of the current mirror circuit 102 and an input end 141 of the inverter circuit 104. The output end 142 of the inverter circuit 104 is coupled with an output terminal 150 of the voltage glitch detector 100. Each of the current mirror circuit 102, the current regulation circuit 103, and the inverter circuit 104 is coupled between a power supply Vdd and a ground reference.

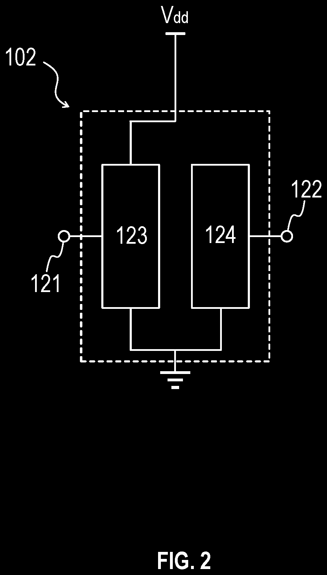

FIG. 2 is a block diagram depicting the current mirror circuit of the voltage glitch detector in accordance with the first embodiment of the present disclosure. The current mirror circuit 102 includes a reference branch 123 and a mirror branch 124. The reference branch 123 is coupled between the power supply Vdd and the ground reference and further coupled with the input end 121 of the current mirror circuit 102. The mirror branch 124 is coupled with the ground reference and further coupled with the output end 122 of the current mirror circuit 102.

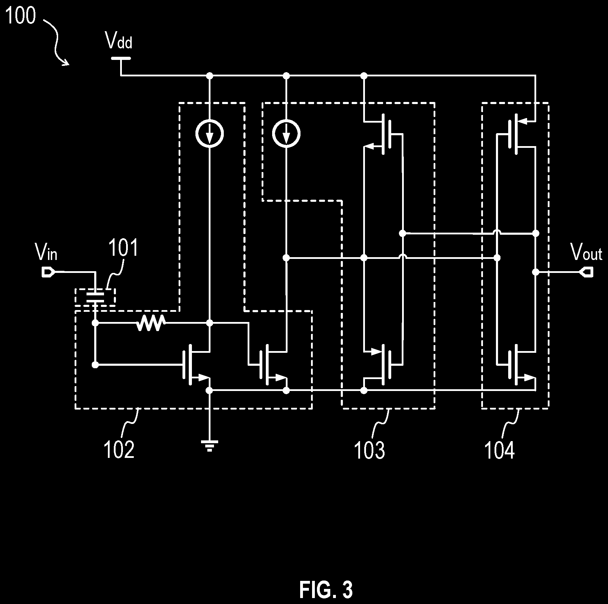

FIG. 3 is a circuit diagram mapping the block diagram of FIG. 1 in accordance with the first embodiment of the present disclosure. The voltage glitch detector 100 includes the current generation circuit 101, the current mirror circuit 102, the current regulation circuit 103, and the inverter circuit 104. The current generation circuit 101 includes a capacitor. The current mirror circuit 102 includes a current source, two transistors and a resistor. The current regulation circuit 103 includes a current source and two transistors. The inverter circuit 104 includes two transistors. Specific structural configurations, which may be applicable in one or more embodiments of the present disclosure, and operations of various parts of the circuitry of the voltage glitch detector 100 will be explained in detail with reference the drawings hereinunder.

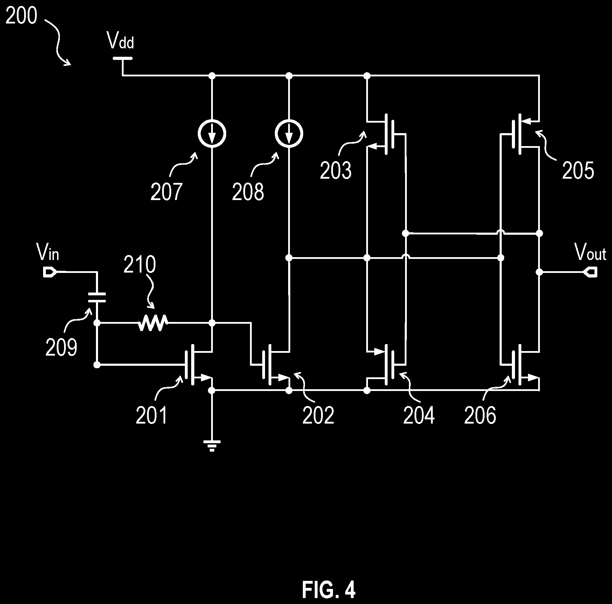

FIG. 4 is the circuit diagram of FIG. 3 depicting the voltage glitch detector in accordance with the first embodiment of the present disclosure. The voltage glitch detector 200 is provided for detecting a voltage transient of an input voltage received at an input terminal Vin. As described hereinabove, the voltage glitch detector 200 includes a current generation circuit, a current mirror circuit, a current regulation circuit, and an inverter circuit. The current generation circuit is coupled with the input terminal Vin and includes a first capacitor 209. The current mirror circuit includes a first current source 207, a resistor 210 and a first transistor 201 that collectively consist a reference branch of the current mirror circuit. The current mirror circuit further includes a second transistor 202 which is a mirror branch of the current mirror circuit. The resistor 210 is coupled between a control terminal of the first transistor 201 and a control terminal of the second transistor 202. The resistor 210 is also coupled between the control terminal of the first transistor 201 and a drain terminal of the first transistor 201. The drain terminal of the first transistor 201 is coupled with the first current source 207.

The current regulation circuit includes a second current source 208, a third transistor 203 and a fourth transistor 204. The second current source 208 is coupled in series with the second transistor 202. The third transistor 203 is coupled in parallel with the second current source 208. The fourth transistor 204 is coupled in series with the third transistor 203 and coupled in parallel with the second transistor 202. The inverter circuit includes a fifth transistor 205 and a sixth transistor 206. The sixth transistor 206 is coupled in series with the fifth transistor 205 between the power supply Vdd and the ground reference. The output of the inverter circuit is coupled with an output terminal Vout of the voltage glitch detector 200 and further coupled with a control terminal of the third transistor 203 and a control terminal of the fourth transistor 204. The output of the current mirror circuit is coupled with a control terminal of the fifth transistor 205 and a control terminal of the sixth transistor 206.

As shown in FIG. 4, the first transistor 201, the second transistor 202, the third transistor 203, and the sixth transistor 206 are N-MOSFETs, and the fourth transistor 204 and the fifth transistor 205 are P-MOSFETs. However, the skilled person will appreciate that types of the above-mentioned transistors are not limited to what have been illustrated in FIG. 4. Any combination of transistors with any transistor type that can fulfill the function of detecting a voltage transient described in the context of the present disclosure is applicable.

Also, as shown in FIG. 4, at least one of the first current source 207 and the second current source 208 is selected from one of the following: a constant current source, an emitter follower current source, a diode current source, an Op-Amp current source, a MOSFET current source, and a JFET current source. However, the skilled person will appreciate that other implementations for providing a current as either the first current source 207 or the second current source 208 respectively functions are also applicable.

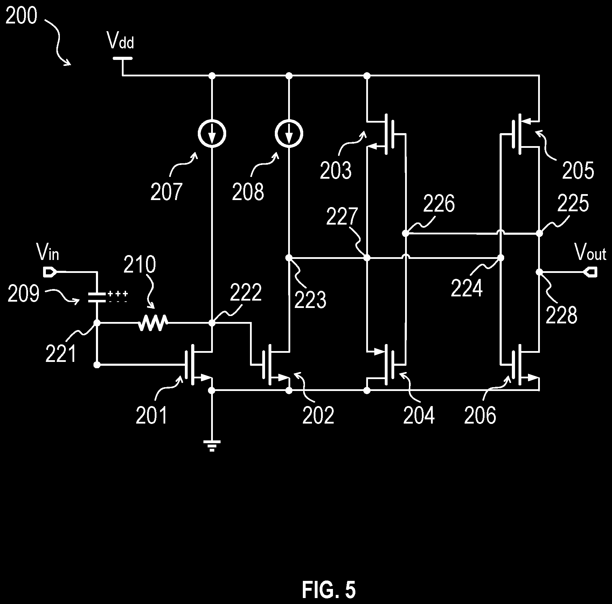

Based on the structural configuration of the circuitry as illustrated in the embodiment of in FIG. 4, operations of the circuitry of the voltage glitch detector 200 will now be explained, with reference to FIG. 5.

FIG. 5 shows a schematic diagram of voltage analysis for nodes of circuitry of the voltage glitch detector in accordance with the first embodiment of the present disclosure. The voltage glitch detector 200 is capable of detecting a voltage transient of an input voltage received at an input terminal Vin. When there is no glitch received at the input terminal Vin (i.e., the voltage level provided at the input terminal Vin is stable) and the voltage glitch detector 200 works in a stable status, the voltage level provided at the input terminal Vin and the voltage potential at the node 221 remain unchanged, and the voltage difference across the first capacitor 209 is a stable value. That is to say, the instantaneous rate of voltage change over time for the first capacitor 209 is zero, and the above-explained 'dv/dt' for calculating current provided by the first capacitor 209 is also zero. Under such, the first capacitor 209 is neither working in a charge state nor working in a discharge state. The circuit between the input terminal Vin and the node 221 is deemed as an open circuit.

As shown in FIG. 5, the resistor 210 is coupled between the gate terminal and the drain terminal of the first transistor 201 which carries the reference current to be replicated. For a conventional MOSFET as a voltage-controlled device, such as the first transistor 201, its gate is featured to be insulated, and no constant current is able to be provided by the gate. Thus, the circuit between the node 221 and the node 222 is deemed as a conductive wire. No current flows through the resistor 210 at this time. The voltage potential at the node 221 keeps the same as the voltage potential at the node 222, and the voltage levels of the gate terminals of the first transistor 201 and the second transistor 202 are the same. The drain terminal of the first transistor 201 is coupled with the first current source 207. Considering conservation of current at the node 222, the current provided by the first current source 207 will directly flow through the first transistor 201. That is to say, the reference current to be replicated by the mirror branch of the current mirror circuit is provided by the first current source 207.

When the current mirror circuit is designed to work in a balance state, in order to use the current mirror circuit for an accurate replication of the reference current, the first transistor 201 and the second transistor 202 are both designed to work in their saturation states.

It is understood that, without considering channel length modulation, when an N-MOSFET is working in a saturation state, the calculation of the drain current of the N-MOSFET follows the formula of:
$I = \frac{1}{2} {μ}_{n} {C}_{ox} \frac{W}{L} {\left({V}_{GS}-{V}_{TH}\right)}^{2}$ (2)

Where, W and L are the channel width and length of the N-MOSFET, µn is the free electron mobility in the channel, Cox is the gate oxide capacitance per unit area, and VGS is the voltage difference between the gate and source of the N-MOSFET while VTH is the threshold voltage of the N-MOSFET.

It is also understood that, by configuring the same parameter of µn, Cox, VGS and VTH, and respectively configuring the parameter of the channel width and length of the N-MOSFET for the first transistor 201 and the second transistor 202, the mirror current on the mirror branch of the current mirror circuit output by the second transistor 202 is proportional to the reference current provided by the first current source 207 according to the proportional relationship of the width-length ratio of the first transistor 201 and the second transistor 202. In the first embodiment of the present disclosure, for example, the width-length ratio of the first transistor 201 and the second transistor 202 may be configured to be the same, such that the mirror current on the mirror branch of the current mirror circuit output by the second transistor 202 is the same as the reference current provided by the first current source 207.

As described above in accordance with the first embodiment of the present disclosure, in the moment there is no glitch received at the input terminal Vin, the voltage glitch detector 200 works in a stable state. There are three sets of initial parameters preconfigured. First, the voltage level provided at the input terminal Vin is presented to be higher than the voltage potential at the node 221 when respectively relative to the same ground reference. This causes a voltage difference between two plates of the first capacitor 209, and the actual voltage across the first capacitor 209 being the algebraic difference between the voltages at its two plates. Accordingly, the charge distribution is driven by the same voltage difference, which means the plate of the first capacitor 209 closer to the input terminal Vin is presented to be the positive plate which carries positive charges (i.e., +Q) of a magnitude relevant to voltage difference between two plates of the first capacitor 209, while the other plate of the first capacitor 209 closer to the node 221 is presented to be the negative plate which carries negative charges (i.e., -Q) of a magnitude relevant to the voltage difference between two plates of the first capacitor 209. As shown in FIG. 5, the charges are uniformly distributed across the surfaces of both plates, forming a stable electric field. Second, the current value of a current provided by the first current source 207 is presented to be lower than the current value of a current provided by the second current source 208. Thirdly, the voltage level of the output of the current mirror circuit, as shown, at the node 223 (i.e., also the connected node 224), is presented to be a value which is configured to be slightly higher than the threshold value of the sixth transistor 206, in order to switch on the sixth transistor 206 of the inverter circuit and switch off the fifth transistor 205 of the inverter circuit. For the inverter circuit, when the sixth transistor 206 is switched on and the fifth transistor 205 is switched off, the voltage level of the output of the inverter circuit, as shown, at the node 225 (i.e., also the connected node 226, 228), which is coupled with the output terminal Vout, is presented to be a low voltage level (e.g., zero). The inverter circuit thus inverts a (relatively) high value at its input to a low value at its output. However, the skilled person will appreciate that any parameter configuration or combination of the above-mentioned initial parameters that can fulfill the function of detecting a voltage transient described in the context of the present disclosure is applicable.

As the output of the inverter circuit is coupled with the control terminal of the third transistor 203 of the current regulation circuit of the voltage glitch detector 200 and the control terminal of the fourth transistor 204 of the current regulation circuit, the low voltage potential at the node 226 enables the fourth transistor 204 to be switched on and enables the third transistor 203 to be switched off. The source terminal of the third transistor 203 is coupled with the source terminal of the fourth transistor 204, and the drain terminal of the second transistor 202 is coupled with the second current source 208, the source terminal of the third transistor 203 and the source terminal of the fourth transistor 204. It is understood that, comparing with the voltage variation at the node 223, the voltage variation of the output of the current regulation circuit, at the node 227, has almost no substantial impact on the voltage variation at the node 224.

When there is a sudden voltage transient received at the input terminal Vin, which might mean one hacking action is initiated by a hacker, for example, a rapid-dropping voltage transient, in accordance with the first embodiment of the present disclosure, the voltage difference across the first capacitor 209 starts to change over time. That is to say, the instantaneous rate of voltage change over time for the first capacitor 209 becomes non-zero, and the above-explained 'dv/dt' for calculating current provided by the first capacitor 209 has a certain value other than zero. Because the voltage transient is a voltage drop at the input terminal Vin, the first capacitor 209 now works in a discharge state. The positive charge on the positive plate of the first capacitor 209 (i.e., the plate at the end near the input terminal Vin as shown in FIG. 5) begins to flow away towards the input terminal Vin. Due to the nature of the capacitance of the first capacitor 209, the negative charge on the negative plate of the first capacitor 209 (i.e., the plate at the end near the node 221 as shown in FIG. 5) begins to move away towards the node 221 to compensate for the loss of charge on the positive plate of the first capacitor 209 caused by the voltage drop at the input terminal Vin. A current will thus be correspondingly generated and deemed provided out by the first capacitor 209 in a direction towards the negative plate of the first capacitor 209. In other words, the capacitor operates as a current generation circuit, in response to the voltage transient. Considering conservation of current at the node 221 and the node 222, a corresponding dynamic current is extracted from the first current source 207 and flows through the resistor 210 in a direction from the node 222 to the node 221. The above-mentioned reference current to be replicated, originally provided by the first current source 207 and flowing through the first transistor 201, is now split into two parts, due to the extracted current flowing through by the resistor 210. The equilibrium state of the current mirror circuit has been disrupted, and the mirror current no longer, replicates the reference current. The input and output characteristics of the first transistor 201 and the second transistor 202 need to be respectively analyzed as a separate conventional inverting amplifier, whose output voltage is in phase opposition to its input voltage. Or in simpler terms, for a transistor working as a conventional inverting amplifier, its output voltage decreases as its input voltage increases, or its output voltage increases as its output voltage decreases.

As the negative charges at the node 221 accumulate over time, the voltage potential at the node 221 drops furthermore. The decreasing voltage at the node 221 is coupled into the control/input terminal of the first transistor 201. Considering the input and output characteristics of the first transistor 201 , its output voltage accordingly increases, and in turn, the voltage potential at the node 222 increases. The increasing voltage at the node 222 is coupled into the control/input terminal of the second transistor 202. Considering the input and output characteristics of the second transistor 202, its output voltage accordingly decreases, and lowers the voltage potential at the node 223. When there is no glitch received at the input terminal Vin, the voltage level of the output signal of the current mirror circuit, at the node 223 (i.e., also the connected node 224), is configured to have a value which is slightly higher than the threshold value of the sixth transistor 206, in order to switch on the sixth transistor 206 of the inverter circuit and switch off the fifth transistor 205 of the inverter circuit.

By now it is understood that, with the voltage level received at the input terminal Vin decreased, in a chain, the voltage potential at the node 221 drops, the voltage potential at the node 222 increases, the voltage potential at the node 223 drops, leading to a voltage potential at the node 224 to become a value which is lower than the threshold value of the sixth transistor 206, causing the sixth transistor 206 of the inverter circuit to be switched off and the fifth transistor 205 of the inverter circuit to be switched on. For the inverter circuit, when the sixth transistor 206 is switched off and the fifth transistor 205 is switched on, the voltage level of the output signal of the inverter circuit, at the node 225 (i.e., also the connected node 226, 228), which is coupled with the output terminal Vout, is presented to be a relatively high voltage level. Thus, the pair of the fifth transistor 205 and the sixth transistor 206 is operated as an inverter circuit, by inverting the relatively low voltage level at an input thereof to a high voltage level at an output thereof. The high voltage level at the output terminal Vout, can be further used for indicating the detection of the voltage transient received at the input terminal Vin, for example as a visual-based indication (e.g., UI display), a soundbased indication (e.g., speaker alarm), a touch-based indication (e.g., device vibration), etc.

As the output of the inverter circuit is coupled with the control terminal of the third transistor 203 and the control terminal of the fourth transistor 204, the produced high voltage potential at the node 226 enables the fourth transistor 204 to be switched off and enables the third transistor 203 to be switched on.

When there is no more the sudden rapid-dropping voltage transient in the input signal received at the input terminal Vin, which might mean that a power glitch injection, as one hacking action, stops, the voltage level provided at the input terminal Vin starts to rise to its initial value. Also, there might be a period during which the voltage level provided at the input terminal Vin is maintained at the low value. As the voltage level provided at the input terminal Vin starts to increase, the first capacitor 209 will charge, and a current will thus be generated and provided by the first capacitor 209 in a direction away from the negative plate of the first capacitor 209. Considering conservation of current at the node 221 and the node 222, a correspondingly dynamic current flows through the resistor 210 in a direction from the node 221 to the node 222. The voltage potential at the node 221 increases correspondingly. Considering the input and output characteristics of the first transistor 201, its output voltage accordingly decreases, and in turn the voltage potential at the node 222 drops. Considering the input and output characteristics of the second transistor 202, its output voltage accordingly increases, which improves the voltage potential at the node 223. In the chain, the increase in the voltage level at the input terminal Vin results in an increase of the voltage potential at the node 221, causes a decrease of the voltage potential at the node 222 and an increase of the voltage potential at the node 223, and leads to a voltage potential at the node 224 to be a value which is greater than the threshold value of the sixth transistor 206, which switches on the sixth transistor 206 of the inverter circuit again, and switches off the fifth transistor 205. For the inverter circuit, when the sixth transistor 206 is switched on and the fifth transistor 205 is switched off, the voltage level of the output signal of the inverter circuit, which is also provided at the output terminal Vout, becomes zero again. Accordingly, the fourth transistor 204 is switched on and the third transistor 203 is switched off.

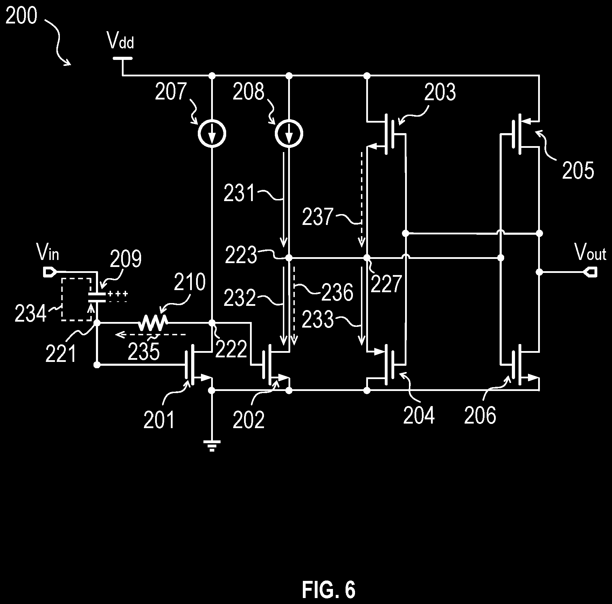

FIG. 6 shows a schematic diagram of current analysis for branches of circuitry of the voltage glitch detector in accordance with the first embodiment of the present disclosure. With reference to the preceding described voltage analysis for nodes of circuitry of the voltage glitch detector 200, current analysis for branches of circuitry of the voltage glitch detector 200, especially for branches of the current generation circuit and the current regulation circuit of the voltage glitch detector 200 will be explained. Specific current analysis is shown in FIG. 6 by using directional arrow symbols drawn with solid lines and with dotted lines, for representing the current and its direction in which the current flows, respectively, when there is no glitch received at the input terminal Vin and when there is a sudden voltage transient received at the input terminal Vin.

In the first embodiment of the present disclosure, the voltage level provided at the input terminal Vin is presented in normal operation (i.e., absent a voltage transient) to be higher than the voltage potential at the node 221. The current value of a current provided by the first current source 207 is presented to be lower than the current value of a current provided by the second current source 208. As described above, at the moment when there is no glitch received at the input terminal Vin and the voltage glitch detector 200 works in a stable state, the fourth transistor 204 and the sixth transistor 206 are switched on and the third transistor 203 and the fifth transistor 205 are switched off. The first capacitor 209 is neither working in a charge state nor working in a discharge state. The circuit between the input terminal Vin and the node 221 is deemed as an open circuit. The circuit between the node 221 and the node 222 is deemed as a conductive wire. No current flows through the resistor 210 at this time. As the width-length ratio of the first transistor 201 and the second transistor 202 is configured to be the same, the mirror current on the mirror branch of the current mirror circuit output by the second transistor 202 is the same as the reference current provided by the first current source 207. As the current value of the current provided by the first current source 207, which is replicated and output by the second transistor 202 as the mirror current (i.e., marked as arrow symbol 232), is presented to be lower than the current value of the current (i.e., marked as arrow symbol 231) provided by the second current source 208, considering conservation of current at the node 223 (i.e., also the connected node 227), a compensation/balancing current (i.e., marked as arrow symbol 233) is presented and flows through the fourth transistor 204, and the current value of the current 231 equals to the sum of the current value of the current 232 and the current value of the current 233.

This further explains for a benefit of configuring the voltage level of the output signal of the current mirror circuit, as shown, at the node 223, to be a value which is slightly higher than the threshold value of the sixth transistor 206 for switching on the sixth transistor 206 of the inverter circuit of the voltage glitch detector 200, which further induces the switched-on of the fourth transistor 204. Otherwise, nonconservation of the current, even at one node of the circuitry, could possibly lead to instability of the entire voltage glitch detector 200. For example, the needed compensation/balancing current has to be extracted from other parts of the circuitry and, this could potentially cause unknown faults of the circuitry. In addition, the above-mentioned parameter configuration of the slightly higher value of the voltage potential provided at the node 223 will induce the flip-over response of the inverter circuit to be much quicker considering the relative-lesser change of the voltage potential at the node 223, which will enhance the voltage transient detection efficiency and the operating sensitivity of some embodiments of the voltage glitch detector 200.

When there is a sudden rapid-dropping voltage transient received at the input terminal Vin, in accordance with the first embodiment of the present disclosure as described above, a current (i.e., marked as arrow symbol 234) will be generated and deemed provided out by the first capacitor 209 in a direction towards the negative plate of the first capacitor 209. Considering conservation of current at the node 221 and the node 222, a corresponding dynamic current (i.e., marked as arrow symbol 235) is extracted from the first current source 207 and flows through the resistor 210 in a direction from the node 222 to the node 221. The above-mentioned reference current to be replicated, originally provided by the first current source 207 and flowing through the first transistor 201, is now split into two parts, due to the extracted current 235 flowing by the resistor 210. The equilibrium state of the current mirror circuit has been disrupted, and the reference current is no longer accurately replicated.

As described above, the voltage potential at the node 221 decreases, which raises the voltage potential at the node 222. The node 222 is coupled with the control/input terminal of the second transistor 202. As the node 222 is coupled with the control/input terminal of the second transistor 202, referring to above-mentioned formula (2), the increase of the voltage potential at the node 222 will thereby increase the current (i.e., marked as arrow symbol 236) flowing through the second transistor 202.

With the voltage potential at the node 222 and the current value of the current 236 increased, in a chain, the voltage potential at the node 223 drops, leading to the switched-off of the sixth transistor 206 and the switched-on of the fifth transistor 205 and the subsequent switched-off of the fourth transistor 204 and the switched-on of the third transistor 203.

When there is no glitch received at the input terminal Vin and the voltage glitch detector 200 works in a stable state, the current value of the current 232 is the same as the current value of the current provided by the first current source 207 and is lower than the current value of the current (i.e., marked as arrow symbol 231) provided by the second current source 208, thus a compensation/balancing current 233 is needed for conservation of current at the node 223 and the node 227. As the continuous increase of the current 236, the switched-on of the third transistor 203 and the switched-off of the fourth transistor 204, the current value of the current 236 will eventually be greater than the current value provided by the second current source 208 and a compensation/balancing current (i.e., marked as arrow symbol 237) is presented and flowing through the third transistor 203 considering conservation of current at the node 223 (i.e., also the connected node 227), and the current value of the current 236 equals to the sum of the current value of the current 231 and the current value of the current 237.

This further explains the benefit of configuring the current regulation circuit for the voltage glitch detector 200. A configuration of the current regulation circuit, such as that shown, which includes the second current source 208, the third transistor 203 and the fourth transistor 204, enables the current at the node 223 and the node 227 to be conserved due to the continuous change of the voltage potential at the node 223 and the continuous change of the current value of the current 236. Without some form of the current regulation circuit, the needed compensation/balancing current would typically have to be extracted from other parts of the circuitry and the above-mentioned changing trends of the voltage potential at each node of the voltage glitch detector 200 could be difficult, or not possible, to achieve which might cause the entire voltage glitch detector 200 to be malfunctional, leading to the output terminal Vout to be unable to provide an output signal in which a transition occurs indicative of the detection of the voltage transient received at the input terminal Vin.

As described above, referring to above-mentioned formula (1), the current generated when a capacitor is in working in a charge or a discharge state, is related to the capacitance value of the capacitor itself. By appropriately configuring the capacitance value of the current generation circuit, for example the first capacitor 209 of FIG. 4 to FIG. 6 in accordance with the first embodiment, a current with an appropriate/desired current value can be produced. Theoretically, the larger the capacitance value of the capacitor is, the greater the current is provided by the capacitor. As a result, the corresponding amplitude, degree and rate of the change of the voltage potentials at various nodes of the voltage glitch detector, for example as those described with reference to FIG. 5, can be suitable selected. The voltage glitch detector may thus respond against the detection of the voltage transient in a swift manner. However, people will appreciate that, in practice, the capacitance value of the capacitor cannot be configured to be too large due to design constraints.

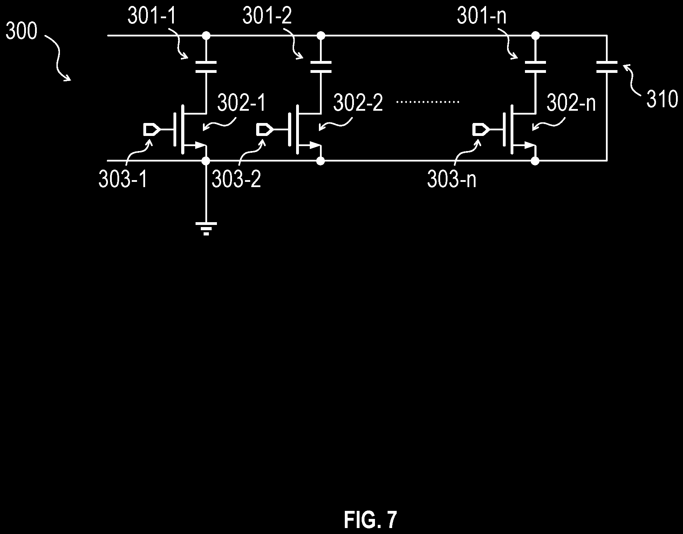

FIG. 7 shows a circuit diagram of the programmable capacitor of the voltage glitch detector in accordance with an embodiment of the present disclosure. As shown in FIG. 7, a circuitry 300 of a programmable capacitor is designed and provided for configuring the capacitance value of the capacitor of the current generation circuit of the embodiments, for example the first capacitor 209 as shown in FIG. 4 to FIG. 6 in accordance with the first embodiment. Multiple branches, each including a capacitor (i.e., 301-1, 301-2,...,301-n) and a transistor (i.e., 302-1, 302-2,...,302-n) that are connected in series, are provided. Each branch is coupled in parallel with one another, and is further coupled in parallel with a fixed capacitor 310. When all the transistors (i.e., 302-1, 302-2,...,302-n) are switched off, the capacitance value provided by the circuitry 300 is the capacitance value of the capacitor 310.

Through switching on one or more transistors (i.e., 302-1, 302-2,...,302-n) by configuring respective voltages on the control terminals (i.e., 303-1, 303-2,...,303-n) thereof, the corresponding one or more capacitors of the corresponding one or more branches are coupled in parallel with the fixed capacitor 310. Thereby, the capacitance value provided by the circuitry 300 equals to the sum of the capacitance value of the fixed capacitor 310 and the capacitance value of the corresponding one or more capacitors that are now coupled in parallel with the fixed capacitor 310. It will be appreciated that the circuitry 300 may be coupled into the current generation circuit in addition to the inherent capacitor, for example the first capacitor 209 as shown in Fig. 4, or may be coupled into the current generation circuit to replace the inherent capacitor therein. Within the circuitry 300, the fixed capacitor 310 is also optional. However, the skilled person will appreciate that any other type of capacitors designed with an adjustable capacitance value (e.g., a variable capacitor) that can fulfill the function of providing a current with an appropriate/desired current value which supports the detection a voltage transient described in the context of the present disclosure is also applicable.

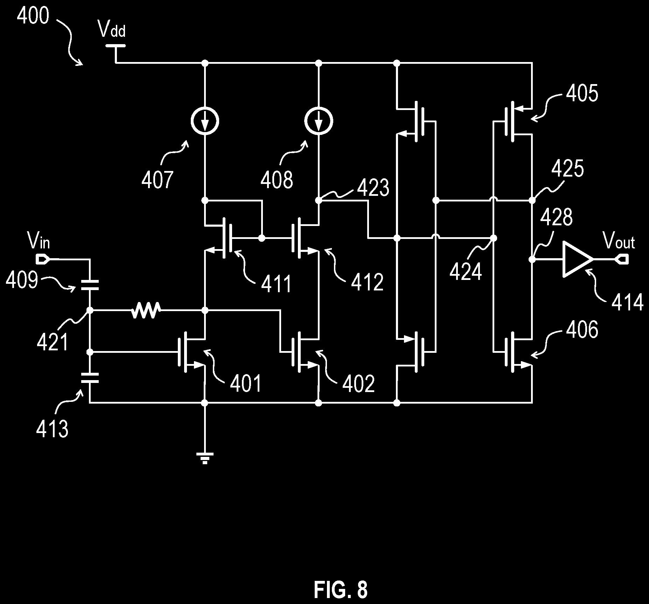

FIG. 8 is a circuit diagram of a voltage glitch detector in accordance with a second embodiment. The operations of the circuitry of the voltage glitch detector 400 in accordance with the second embodiment similar to that of the voltage glitch detector 200 in accordance with the first embodiment as described above, and similar components thereof are similarly labelled. However, the voltage glitch detector 400 of the second embodiment differs from the first embodiment in three aspects.

Firstly, the voltage glitch detector 400 includes a second capacitor 413 which is coupled between the current mirror circuit and the ground reference. As shown in FIG. 8, the second capacitor 413 is further coupled in series with the first capacitor 409. As described above, when there is a sudden voltage transient received at the input terminal Vin, a current will thus be produced by the first capacitor 409. However, there may be glitches with negligible degree of change in the voltage level at the input terminal Vin, which may be considered as noise in the detections of voltage transients. Such noise, when causing a flip-over in the output signal provided at the output terminal Vout, will indicate a detection of voltage transients, which is unwanted. The second capacitor 413 is configured to reduce or eliminate noise from being detected as the voltage transient. When the first capacitor 409 reacts to the noise by generating a noise-based current, the second capacitor 413 absorbs the noise-based current before it reaches the subsequent current mirror circuit and causes the current mirror circuit to work. Referring to the above-mentioned formula (1), the current generated by a capacitor is relevant to the capacitance value of the capacitor itself. By adjusting the ratio of the capacitance value of the first capacitor 409 and the second capacitor 413, the current to be absorbed/provided by the second capacitor 413 is configured such that unwanted triggering by the noise can be effectively avoided.

Secondly, the voltage glitch detector 400 further includes a seventh transistor 411 in the reference branch of the current mirror circuit, and an eighth transistor 412 in the mirror branch. The seventh transistor 411 is coupled between the first current source 407 and the first transistor 401, and the eighth transistor 412 is coupled between the second current source 408 and the second transistor 402. A gate terminal and a drain terminal of the seventh transistor 411 are coupled together. Gate terminals of the seventh transistor 411 and the eighth transistor 412 are coupled together. Thus, the first transistor 401, the second transistor 402, the seventh transistor 411, and the eighth transistor 412 are collectively provided and configured as part of a cascode current mirror circuit. The cascode current mirror circuit of this embodiment has a high output resistance, improved current mirror/matching and thermal stability, and reduced sensitivity to load variations. Moreover, through the cascode current mirror circuit, it is easy to configure (i.e., raise) the voltage potential at the node 423 by having coupled the eighth transistor 412 in the mirror branch.

Thirdly, the voltage glitch detector 400 further includes a buffer circuit 414 which is coupled between the inverter circuit and the output terminal Vout. When the inverter circuit responds to the detection of the voltage transient received at the input terminal Vin with a transitional voltage level , the output signal is not always an ideal waveform (e.g., a standard pulse wave). The buffer circuit 414 is configured to regulate the voltage level of the output signal to be approximately a voltage level of the power supply Vdd. An implementation of the buffer circuit 414 may include two further inverter circuits that are coupled in series, post to the pre-existed inverter circuit of the voltage glitch detector 400.

The skilled person will appreciate that in one or more other embodiments, a voltage glitch detector may be similar to that shown in FIG.4, but with one or more, but not all three of the differences, just mentioned with reference to FIG. 8.

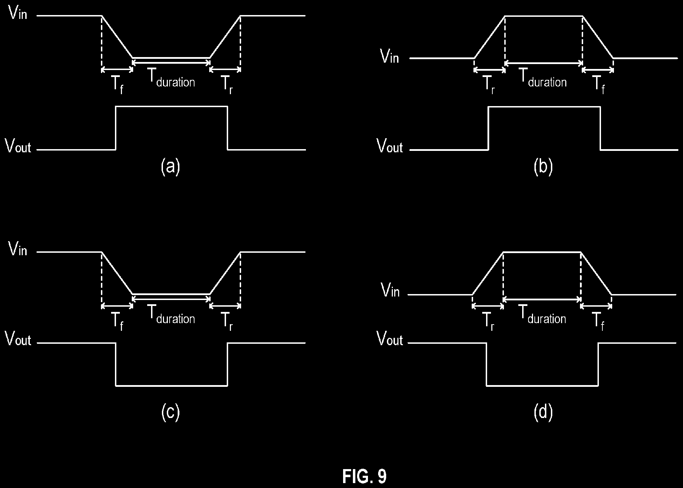

FIG. 9 shows timing diagrams of input voltage and output voltage under different parameter conditions in accordance with the second embodiment of the present disclosure. As described above, when there is no glitch received at the input terminal Vin, the voltage level provided at the input terminal Vin is stable. The voltage level of the output signal provided at the output terminal Vout, is presented to be a low voltage level (e.g., zero). When there is a sudden rapid-dropping voltage transient received at the input terminal Vin, a regulated output signal with a transitional voltage level (i.e., from zero to Vdd) is provided at the output terminal Vout which indicates the detection of the voltage transient. When the sudden rapid-dropping voltage transient received at the input terminal Vin ends, the voltage level provided at the input terminal Vin will maintain to be a stable low value for some durations and then start to rise until reaching its initial value when there is no glitch received at the input terminal Vin. The voltage level of the output signal provided at the output terminal Vout, is correspondingly presented to be zero again. The timing diagrams of the above first circumstance is shown as part (a) of FIG. 9, where Tf stands for the time interval of the rapid-dropping voltage transient, Tr stands for the time interval of the input voltage recovering from the rapid-dropping voltage transient to its initial input voltage level, and Tduration stands for the time interval of the input voltage maintaining to be a stable low value after the power glitch injection by a hacker and the end of the rapid-dropping voltage transient. It should be noted that, the degree of change of the input voltage level, the rate of change of the input voltage over time during dropping/rising of the input voltage and the mutual relationship of the rate of change of the input voltage over time between dropping and rising of the input voltage are not limited to what is shown in FIG. 9. Also, it will be appreciated that the length of Tduration is not necessarily presented as shown in FIG. 9. The starting point of Tr can directly connect with the end point of Tf as shown in part (a) of FIG. 9, which means the recovery of the input voltage from the rapid-dropping voltage transient to its initial input voltage level can happen right after the end of the rapid-dropping voltage transient.

As shown in part (a) of FIG. 9, at first, when there is no glitch received at the input terminal Vin, the voltage level provided at the input terminal Vin is stable, and the voltage level of the output signal provided at the output terminal Vout presented to be a low voltage level (e.g., zero). Taking into account a reasonable/practical operating time and response delay of each component in the voltage glitch detector, the transitional voltage level (i.e., from zero to Vdd) in the regulated output signal happens later than the sudden rapid-dropping voltage transient which last for a time Tf. The transitional voltage level of the output signal lasts for a time Tduration until the input voltage starts to recover from the dropped voltage transient which last for a time Tr. Again, considering the reasonable/practical operating time and response delay of each component in the voltage glitch detector, the flip-over of the regulated output signal is later than the start of the rise of the voltage level at the input terminal Vin.

However, it is not always the situation that the input signal encounters a rapid dropping as a voltage transient. In practice, there may be a voltage transient appearing as a rapid-rising voltage transient. The voltage glitch detector according to the embodiments is also able to detect this different voltage transient at the input terminal Vin by preconfiguring its three sets of initial parameters. As shown in FIG. 8, in accordance with the second embodiment of the present disclosure, the first sets of initial parameters to be preconfigured are the initial current value provided by the first current source 407 and the initial current value provided by the second current source 408. The second sets of initial parameters to be preconfigured are the initial voltage level provided at the input terminal Vin and the initial voltage potential at the node 421. The third set of initial parameters to be preconfigured is the initial voltage potential at the node 423 (i.e., also the connected node 424).

In accordance with another aspect of the second embodiment of the present disclosure, when there is no glitch received at the input terminal Vin, the voltage level provided at the input terminal Vin is stable and presented to be lower than the voltage potential at the node 421. The current value of a current provided by the first current source 407 is presented to be lower than the current value of a current provided by the second current source 408. The voltage potential at the node 423 (i.e., also the connected node 424), is presented to be a value which is configured to be slightly higher than the threshold value of the sixth transistor 406, in order to switch on the sixth transistor 406 of the inverter circuit of the voltage glitch detector 400 and switch off the fifth transistor 405 of the inverter circuit of the voltage glitch detector 400. For the inverter circuit, when the sixth transistor 406 is switched on and the fifth transistor 405 is switched off, the voltage level of the output signal of the inverter circuit, as shown, at the node 425 (i.e., also the connected node 428), is presented to be a low voltage level. After the regulation of the output signal of the inverter circuit by the buffer circuit 414, the voltage level of the output signal provided at the output terminal Vout is presented to be a low voltage level (e.g., zero).

Under this circumstance, when there is a sudden rapid-rising voltage transient received at the input terminal Vin, the first capacitor 409 now works in a charge state, and a current will thus be correspondingly generated and deemed provided out by the first capacitor 409 in a direction towards the negative plate of the first capacitor 409. Referring to the voltage analysis for nodes of circuitry of the voltage glitch detector described in the context of the present disclosure, a corresponding regulated output signal with a transitional voltage level (i.e., from zero to Vdd) is provided at the output terminal Vout which indicates the detection of the voltage transient. When the sudden rapid-rising voltage transient received at the input terminal Vin ends, the voltage level provided at the input terminal Vin will maintain to be a stable high value for some durations and then start to drop until reaching its initial value when there is no glitch received at the input terminal Vin. The voltage level of the output signal provided at the output terminal Vout, is correspondingly presented to be zero again. The timing diagrams of the above fourth circumstance is shown as part (b) of FIG. 9.

In accordance with another aspect of the second embodiment of the present disclosure, when there is no glitch received at the input terminal Vin, the voltage level provided at the input terminal Vin is stable and presented to be lower than the voltage potential at the node 421. The current value of a current provided by the first current source 407 is presented to be higher than the current value of a current provided by the second current source 408. The voltage potential at the node 423 (i.e., also the connected node 424), is presented to be a value which is configured to be slightly lower than the threshold value of the sixth transistor 406, in order to switch off the sixth transistor 406 of the inverter circuit of the voltage glitch detector 400 and switch on the fifth transistor 405 of the inverter circuit of the voltage glitch detector 400. For the inverter circuit, when the sixth transistor 406 is switched off and the fifth transistor 405 is switched on, the voltage level of the output signal of the inverter circuit, as shown, at the node 425 (i.e., also the connected node 428), is presented to be a high voltage level. After the regulation of the output signal of the inverter circuit by the buffer circuit 414, the voltage level of the output signal provided at the output terminal Vout is presented to be approximate to a voltage level of the power supply Vdd.

Under this circumstance, when there is a sudden rapid-dropping voltage transient received at the input terminal Vin, the first capacitor 409 now works in a discharge state, and a current will thus be correspondingly generated and deemed provided out by the first capacitor 409 in a direction towards the positive plate of the first capacitor 409. Referring to the voltage analysis for nodes of circuitry of the voltage glitch detector described in the context of the present disclosure, a corresponding regulated output signal with a transitional voltage level (i.e., from Vdd to zero) is provided at the output terminal Vout which indicates the detection of the voltage transient. When the sudden rapid-dropping voltage transient received at the input terminal Vin ends, the voltage level provided at the input terminal Vin will maintain to be a stable low value for some durations and then start to rise until reaching its initial value when there is no glitch received at the input terminal Vin. The voltage level of the output signal provided at the output terminal Vout, is correspondingly presented to be approximate to a voltage level of the power supply Vdd again. The timing diagrams of the above fourth circumstance is shown as part (c) of FIG. 9.

Furthermore, in accordance with another aspect of the second embodiment of the present disclosure, when there is no glitch received at the input terminal Vin, the voltage level provided at the input terminal Vin is stable and presented to be higher than the voltage potential at the node 421. The current value of a current provided by the first current source 407 is presented to be higher than the current value of a current provided by the second current source 408. The voltage potential at the node 423 (i.e., also the connected node 424), is presented to be a value which is configured to be slightly lower than the threshold value of the sixth transistor 406, in order to switch off the sixth transistor 406 of the inverter circuit of the voltage glitch detector 400 and switch on the fifth transistor 405 of the inverter circuit of the voltage glitch detector 400. For the inverter circuit, when the sixth transistor 406 is switched off and the fifth transistor 405 is switched on, the voltage level of the output signal of the inverter circuit, as shown, at the node 425 (i.e., also the connected node 428), is presented to be a high voltage level. After the regulation of the output signal of the inverter circuit by the buffer circuit 414, the voltage level of the output signal provided at the output terminal Vout is presented to be approximate to a voltage level of the power supply Vdd.

Under this circumstance, when there is a sudden rapid-rising voltage transient received at the input terminal Vin, the first capacitor 409 now works in a charge state, and a current will thus be correspondingly generated and deemed provided out by the first capacitor 409 in a direction towards the positive plate of the first capacitor 409. Referring to the voltage analysis for nodes of circuitry of the voltage glitch detector described in the context of the present disclosure, a corresponding regulated output signal with a transitional voltage level (i.e., from Vdd to zero) is provided at the output terminal Vout which indicates the detection of the voltage transient. When the sudden rapid-rising voltage transient received at the input terminal Vin ends, the voltage level provided at the input terminal Vin will maintain to be a stable high value for some durations and then start to drop until reaching its initial value when there is no glitch received at the input terminal Vin. The voltage level of the output signal provided at the output terminal Vout, is correspondingly presented to be approximate to a voltage level of the power supply Vdd again. The timing diagrams of the above fourth circumstance is shown as part (d) of FIG. 9.

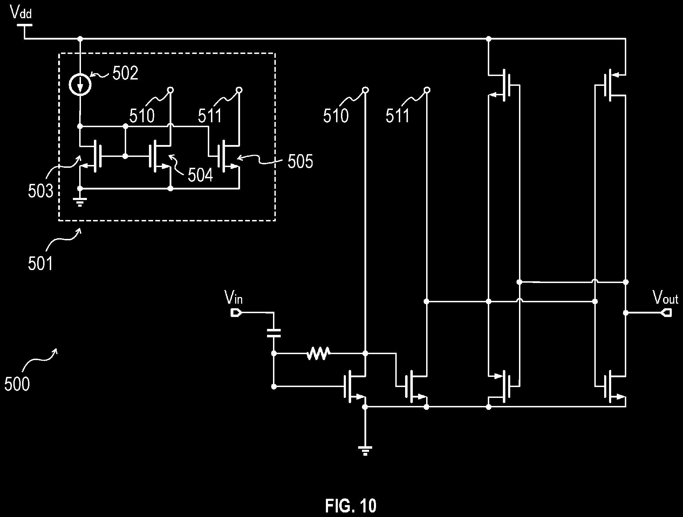

FIG. 10 is a circuit diagram of a voltage glitch detector in accordance with a third embodiment. Operations of the voltage glitch detector 500 in accordance with the third embodiment is almost the same as that of the voltage glitch detector 200 of FIG. 4. However, the voltage glitch detector 500 is differing in one or more aspects, that a second current mirror circuit 501 is included in the voltage glitch detector 500, replacing the first current source 207 and the second current source 208 of the voltage glitch detector 200 of FIG. 4.

As shown in FIG. 4, the first current source 207 and the second current source 208 may be electrically, logically, or physically separate from each other, and the current magnitudes of the currents provided therefrom are independent. The voltage glitch detector 500, by including the second current mirror circuit 501 for providing both currents, provides convenience for designing for the currents.

The second current mirror circuit 501 includes a first current source 502 and a first transistor 503 that collectively consist a reference branch of the second current mirror circuit 501, a second transistor 504 and a first output terminal 510 that collectively consist a first mirror branch of the second current mirror circuit 501, and a third transistor 505 and a second output terminal 511 that collectively consist a second mirror branch of the second current mirror circuit 501. As shown in FIG. 10, the first transistor 503, the second transistor 504 and the third transistor 505 are N-MOSFETs. The first current source 502 is selected from one of the following: a constant current source, an emitter follower current source, a diode current source, an Op-Amp current source, a MOSFET current source, and a JFET current source. However, the skilled person will appreciate that types of the above-mentioned three transistors are not limited to what have been shown in FIG. 10. Also, the skilled person will appreciate that other implementations for providing a current as the first current source 502 functions are also applicable.

It is also known that, by configuring the same parameter of µn, Cox, VGS and VTH, and respectively configuring the parameter of the channel width and length of the N-MOSFET for the first transistor 503, the second transistor 504, and the third transistor 505, a first mirror current on the first mirror branch of the second current mirror circuit 501 output by the second transistor 504 is proportional to the reference current provided by the first current source 502, and follows the proportional relationship of the width-length ratio of the first transistor 503 and the second transistor 504, and a second mirror current on the second mirror branch of the second current mirror circuit 501 output by the third transistor 505 is proportional to the reference current provided by the first current source 502, and will follow the proportional relationship of the width-length ratio of the first transistor 503 and the third transistor 505. The specific parameter of the channel width and length of the N-MOSFET for the first transistor 503, the second transistor 504, and the third transistor 505, are configurable dependent on the relationship of current magnitude of the corresponding current provided for the current mirror circuit and current regulation circuit of the voltage glitch detector 500.

It will be appreciated that, the first output terminal 510 of the second current mirror circuit 501 will provide a first mirror current for the current mirror circuit, and the second output terminal 511 of the second current mirror circuit 501 will provide the second mirror current for the current regulation circuit.

It should be noted that, the greater the rate of change of voltage transients is, the greater the value of 'dv/dt' will be, and the greater the current value of the current will be generated and provided by the capacitor (i.e., 209, 409). The voltage glitch detector in accordance with the present disclosure can typically detect a short and fast voltage glitch with duration of 1ns to 100ns, in contrast to the conventional voltage glitch detector, such as a latch-type glitch detector, which may be unable to accurately detect such short glitches. However, it will be appreciated that, the voltage glitch detector designed in accordance with the present disclosure is also applicable for detecting voltage transients that are not presented in a rapidly changing manner considering the operational principle of the voltage glitch detector in accordance with the present disclosure of converting voltage changes into current-sensitive actuations.

The use of the terms 'a', 'an', 'the' and similar referents in the context of describing the subject matter (particularly in the context of the following claims) are to be construed to cover both the singular and the plural, unless otherwise indicated herein or clearly contradicted by context. Recitation of ranges of values herein are intended merely to serve as a shorthand method of referring individually to each separate value falling within the range, unless otherwise indicated herein, and each separate value is incorporated into the specification as if it were individually recited herein. Furthermore, the foregoing description is for the purpose of illustration only, and not for the purpose of limitation, as the scope of protection sought is defined by the claims set forth hereinafter together with any equivalents thereof entitled to. The use of any and all examples, or exemplary language (e.g., 'such as') provided herein, is intended merely to better illustrate the subject matter, and does not pose a limitation on the scope of the subject matter unless otherwise claimed. The use of the term 'based on' and other like phrases indicating a condition for bringing about a result, both in the claims and in the written description, is not intended to foreclose any other conditions that bring about that result. No language in the specification should be construed as indicating any non-claimed element as essential to the practice of the disclosure as claimed.

Preferred embodiments are described herein, including the best mode known to the inventor for carrying out the claimed subject matter. Of course, variations of those preferred embodiments will become apparent to those of ordinary skill in the art upon reading the foregoing description. The inventor expects skilled artisans to employ such variations as appropriate, and the inventor intends for the claimed subject matter to be practiced otherwise than as specifically described herein. Accordingly, this claimed subject matter includes all modifications and equivalents of the subject matter recited in the claims appended hereto as permitted by applicable law. Moreover, any combination of the above-described elements in all possible variations thereof is encompassed unless otherwise indicated herein or otherwise clearly contradicted by context.

## Claims

1. A voltage glitch detector (100) for detecting a voltage transient of an input voltage received at a first input terminal (110) of the voltage glitch detector (100), comprising:
a current generation circuit (101) coupled with the first input terminal (110);
a first current mirror circuit (102) coupled with the current generation circuit (101);
a current regulation circuit (103) coupled with the first current mirror circuit (102); and
an inverter circuit (104) coupled with the first current mirror circuit (102), the current regulation circuit (103) and a first output terminal (150) of the voltage glitch detector (100), wherein
the first current mirror circuit (102) comprises a reference branch (123) and a mirror branch (124);
the current generation circuit (101) is configured to generate a transient current and cause the generated transient current to flow into and/or out from the current generation circuit (101) in response to the voltage transient of the input voltage at the first input terminal (110);
the current regulation circuit (103) is configured to provide a balancing current into the mirror branch (124); and
the inverter circuit (104) is configured to provide, in response to an output of the mirror branch (124) and at the first output terminal (150), an output signal in which a transition occurs indicative of the voltage transient of the input voltage at the first input terminal (110) detected.

2. The voltage glitch detector of claim 1, wherein the current regulation circuit is further configured to provide the balancing current, a level of which varies in response to the voltage transient of the input voltage at the first input terminal.

3. The voltage glitch detector of claim 1 or 2, further comprising:
a first voltage node coupled with an output end (122) of the first current mirror circuit and an input end (141) of the inverter circuit,
wherein the inverter circuit provides the output signal in which a transition occurs in response to a voltage level at the first voltage node reaches a first value.

4. The voltage glitch detector of any preceding claim, wherein:
the reference branch comprises a first current source and a first transistor that are coupled in series between a power supply and a ground reference; and
the mirror branch is coupled between the current regulation circuit and the ground reference, and further comprises a second transistor.

5. The voltage glitch detector of claim 4, wherein:
a control terminal of the first transistor is coupled with a control terminal of the second transistor via a first resistor, the first resistor is coupled between the control terminal of the first transistor and a drain terminal of the first transistor which is further coupled with the first current source.

6. The voltage glitch detector of claim 4 or 5, wherein the current regulation circuit comprises:
a second current source coupled between the power supply and the second transistor; and
a third transistor and a fourth transistor that are coupled in series between the power supply and the ground reference,
wherein the third transistor is an N-MOSFET, and the fourth transistor is a P-MOSFET,
and wherein a source terminal of the third transistor is coupled with a source terminal of the fourth transistor, a drain terminal of the second transistor, and the second current source.

7. The voltage glitch detector of claim 6, wherein at least one of the first current source and the second current source is selected from one of the following: a constant current source, an emitter follower current source, a diode current source, an Op-Amp current source, a MOSFET current source, and a JFET current source.

8. The voltage glitch detector of claim 6 or 7, wherein the reference branch of the first current mirror circuit further comprises a seventh transistor, and the mirror branch of the first current mirror circuit further comprises an eighth transistor,
wherein the seventh transistor is coupled between the first current source and the first transistor, and the eighth transistor is coupled between the second current source and the second transistor, and
wherein a control terminal of the seventh transistor is coupled with a control terminal of the eighth transistor and a drain terminal of the seventh transistor.

9. The voltage glitch detector of any or claims 4 to 8, wherein the inverter circuit comprises a fifth transistor and a sixth transistor that are coupled in series between the power supply and the ground reference, and
wherein the fifth transistor is a P-MOSFET, and the sixth transistor is an N-MOSFET,
and wherein a drain terminal of the second transistor is coupled with a gate terminal of the fifth transistor and a gate terminal of the sixth transistor.

10. The voltage glitch detector of any preceding claim, further comprising:
a buffer circuit coupled between the inverter circuit and the first output terminal.

11. The voltage glitch detector of any preceding claim, wherein the current generation circuit comprises a first capacitor having a user-defined capacitance.

12. The voltage glitch detector of claim 11, further comprising a second capacitor coupled between the first current mirror circuit and a ground reference, wherein the second capacitor is further coupled in series with the first capacitor.

13. A method for detecting a voltage transient of an input voltage received at a first input terminal (110) by a voltage glitch detector (100), the voltage glitch detector (100) comprising a current generation circuit (101) coupled with the first input terminal (110), a first current mirror circuit (102) coupled with the current generation circuit (101), a current regulation circuit (103) coupled with the first current mirror circuit (102), and an inverter circuit (104) coupled with the first current mirror circuit (102), the current regulation circuit (103) and a first output terminal of the voltage glitch detector (100), wherein the method comprises:
providing, by the current regulation circuit (103), a balancing current into a mirror branch (124) of the first current mirror circuit (102);
in response to the voltage transient of the input voltage at the first input terminal (110), generating, by the current generation circuit (101), a transient current;
causing, by the current generation circuit (101), the generated transient current to flow into and/or out from the current generation circuit (101); and
providing, by the inverter circuit (104), in response to an output of the mirror branch (124) and at the first output terminal (150), an output signal in which a transition occurs indicative of the voltage transient of the input voltage at the first input terminal (110) detected.

14. The method of claim 13, further comprising:
providing, by the current regulation circuit, the balancing current, a level of which varies in response to the voltage transient of the input voltage at the first input terminal.

15. The method of claim 13 or 14, wherein providing the output signal in which a transition occurs comprises:
providing the output signal in which a transition occurs in response to a voltage level at a first voltage node reaches a first value,
wherein the first voltage node is coupled with an output end (122) of the first current mirror circuit and an input end (141) of the inverter circuit.
